# EUROPEAN PATENT APPLICATION

(11) **EP 2 450 691 A1**
(43) Date of publication of application: **09.05.2012**
(21) Application number: 10190221.1
(22) Date of filing: 05.11.2010
(51) Int. Cl.: G01N 21/05, G01N 21/64, B01L 3/00

(54) **Device and method for holding and analysing a sample**

(71) Applicant: Aqsens Oy, 02150 Espoo (FI)
(72) Inventor: Mundill, Paul, FI-02210, ESPOO (FI); Härmä, Harri, FI-20100, TURKU (FI); Hänninen, Pekka, FI-20810, TURKU (FI)
(74) Representative: Brax, Matti Juhani

(57) **Abstract**

A device for holding a sample for optical fingerprinting analysis comprises a carrier, and a distribution of non-specific interacting surfaces extending across said carrier. At least one fluidic channel allows a fluid sample to flow through at least a part of said carrier to get in touch with one or more of said non-specific interacting surfaces. One or more optical windows adjacent to said non-specific interacting surfaces enable optical analysis of results of said sample getting in touch with said non-specific interacting surfaces at multiple locations of the carrier.

## Description

### TECHNICAL FIELD

The invention is related to devices, methods, and structural solutions that are used to hold a liquid sample for optical examination and analysis. Especially the invention is related to the use of non-specific interacting surfaces for allowing the sample to take part in reactions, indications of which may be measured optically.

### BACKGROUND OF THE INVENTION

Optical analysis of liquid samples frequently involves placing small amounts of the sample in spots or wells on a carrier, where it comes in touch with so-called interacting surfaces. Luminophores that are present within the sample and/or within the spots or wells, or are otherwise introduced into the process, become bound in different ways depending on the interactions between the sample and the interacting surfaces. The subsequent optical measurement involves selectively subjecting the spots or wells to optical excitation signals, and measuring the luminescent response. Identifying and quantifying the constituents of a sample, and/or identifying a sample as being equal to a previously measured reference sample, is possible by comparing the observed luminescent response to a library of previously measured responses.

Prior art publications that describe devices and structural solutions for holding a sample in the way considered above are for example the patent applications number PCT/F12010/050354 and EP10185964.3, which at the time of writing this description are not available to the public.

Setting up the interacting surfaces by coating or otherwise chemically treating specific locations (like spots or wells) in the carrier has some inherent disadvantages. For example, in order to make the liquid sample flow smoothly and easily over the carrier surface, or in some cases through channels defined by the carrier, the carrier material (or at least a surface thereof) should be highly hydrophilic. This, however, may be contradictory to requiring that the coatings used to implement the interacting surfaces should stick and remain tightly in place in the appropriate spots or wells. Additionally it may prove difficult to offer sufficiently large interacting surfaces within the spots or wells to properly detect some relatively weak interactions. Yet another disadvantage is the relatively large number of distinct spots or wells on a single carrier (or the need for multiple carriers) that are required for implementing a versatile analysis program that could be optimized for various specialized needs.

### SUMMARY OF THE INVENTION

An objective of the present invention is to present a device for holding a sample for optical fingerprinting examination and analysis that would allow easily controlling the flow of a liquid sample. Another objective of the invention is to present such a device that would allow versatile optimization of the measurement configuration for various spezialiced needs. Yet another objective of the invention is to present such a device that would allow offering a relatively large interacting surface for samples despite the relatively compact size of the device itself. Yet another objective of the invention is to present a device that allows the sample to undergo changes within the device itself.

Yet another objective of the invention is to provide a method for utilizing a device of the above-described kind in an effective and advantageous manner.

The objectives of the invention are achieved by using a distribution of non-specific interacting surfaces extending across a carrier, and by ensuring that said carrier allows optical fingerprinting analysis of interactions between the sample and the non-specific interacting surfaces at multiple locations. Either particles or an essentially continuous membrane can be used to define said non-specific interacting surfaces.

A device according to the invention is characterised by the features recited in the independent claim directed to a device.

A method according to the invention is characterised by the features recited in the independent claim directed to a method.

Using particles to define the interacting surfaces, instead of just chemically treated surfaces of spots or wells, brings literally another dimension into consideration. Particles are three-dimensional by definition, which means that an ensemble of particles in a liquid sample can easily offer a much larger interacting surface per unit volume than any two-dimensional spot or bottom of well. Particles of various kinds are readily available in a variety of sizes, and it is relatively easy to measure and apply a very accurately known amount of particles, which enables tailoring the interacting surfaces and the whole carrier to various sizes, shapes, and needs. Different kinds of particles can be mixed together in accurately controllable proportions, which further facilitates easy variation and tailoring.

Immobilizing particles within a carrier is in many cases easier than trying to establish similar interacting properties directly on surfaces of the carrier. As an example, carriers may be chemically bonded on a surface offered by a structural material of the carrier, or immobilized within a matrix defined by a structural material. The last-mentioned covers e.g. cases where some structural material of the carrier is porous, fibrous or otherwise such that it inherently defines pores or cavities within which the particles can be captured. Yet another approach is to immobilize a plurality of particles in a compartment defined by the carrier, either simply by confining the free particles as such within the compartment or by further immobilizing particles within a hydrogel or similar agent that will be confined in the compartment. In general the term to immobilize means in this description that the particles are kept in place within the carrier, so that no significant portion of the particles is allowed to move along with the sample flow over distances that would be significant compared to the overall dimensions of the carrier.

An essentially continuous membrane offers many advantages similar to those related to particles. It extends the choice of physical locations where interactions can be observed and measured, to cover even the whole carrier. Different kinds of interactions may occur at different locations of the membrane, because the interaction properties of the membrane may be deliberately made different in its various parts and/or because the sample that has already reacted with the first parts of the membrane has a different constitution than what it had when it first entered the carrier. A membrane that extends across a carrier can offer bigger interacting surfaces, i.e. better chances to react, than prior art solutions that were concentrated in spots or wells. Further advantages are described in more detail later in this text.

Using the carrier additionally to define a channel that allows a fluid sample to flow through at least a part of the carrier involves further advantages. This is an easy and well-functioning way of making the sample get in touch with desired ones of the non-specific interacting surfaces, and even in a desired order or cascade, if that is required. The sample may flow through the channel either by itself (e.g. due to capillary forces or natural gravitation) or in an assisted manner (e.g. due to pumping, suction, or centrifuging). If the channel passes through regions of immobilized particles or makes the sample otherwise come into contact with one or more interacting surfaces, the sample that propagates further therefrom is not necessarily any more identical to the sample that entered the carrier, because it may have reacted or otherwise transformed while interacting with the surfaces. Chained regions of non-specific interacting surfaces may thus be used to set up a kind of chromatographic fingerprinting analysis.

Contrary to e.g. known HPLC (high-performance liquid chromatography, or highpressure liquid chromatography) setups, a carrier according to the invention should comprise one or more optical windows adjacent to the non-specific interacting surfaces, for enabling optical fingerprinting analysis of the results of the sample getting in touch with the surfaces. This is associated with the fact that the invention allows interactions to be observed and measured within the carrier and even at multiple locations therein, but also with the fact that the invention encompasses also embodiments where the sample introduced to the device remains there and does not necessarily flow further, which it does in HPLC where the sample flows always all the way through and out of the column that includes the stationary phase. According to the invention the carrier should allow optical measurements (excitation with an excitation signal which is typically optical, and the observation of luminescent radiation) at various locations within the carrier, where interactions occur, and/or in some cases even at locations where no interactions occur. This opens the way to the so-called fingerprinting of samples, where a sample is characterised through the luminescent response that can be observed by irradiating various locations of one or more sample-laden carriers according to a known irradiation pattern.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.
Fig. 1 illustrates a general principle of having particles immobilized by or within a carrier,
fig. 2 illustrates in general the concept of having the particles embedded within a porous carrier material,
fig. 3 illustrates the particles chemically bonded on a surface of the carrier,
fig. 4 illustrates schematially a generally planar carrier with layers for different purposes,
fig. 5 illustrates a general principle of having a distribution of interacting surfaces implemented within a membrane,
fig. 6 illustrates possible spatial arrangement of zones with different kinds of non-specific interacting surfaces,
fig. 7 illustrates another possible spatial arrangement of zones with different kinds of non-specific interacting surfaces,
fig. 8 illustrates another possible spatial arrangement of zones with different kinds of non-specific interacting surfaces,
fig. 9 illustrates another possible spatial arrangement of zones with different kinds of non-specific interacting surfaces,
fig. 10 illustrates schematically a cylindrical carrier,
fig. 11 illustrates schematically the use of a membrane within a cylindrical carrier,
fig. 12 illustrates a possible way of arranging and immobilizing particles within a carrier according to fig. 10,
fig. 13 illustrates another possible way of arranging and immobilizing particles within a carrier according to fig. 10,
fig. 14 illustrates another possible way of arranging and immobilizing particles within a carrier according to fig. 10,
fig. 15 illustrates another possible way of arranging and immobilizing particles within a carrier according to fig. 10,
fig. 16 illustrates the possibility of building chains and networks of carriers,
fig. 17 illustrates a cartridge-type carrier that can be combined with other carriers of similar type,
fig. 18 illustrates a combination of carriers according to fig. 17 snapped together,
fig. 19 illustrates an alternative arrangement of a sample carrier and the optical measurement means,
fig. 20 illustrates a method according to an embodiment of the invention,

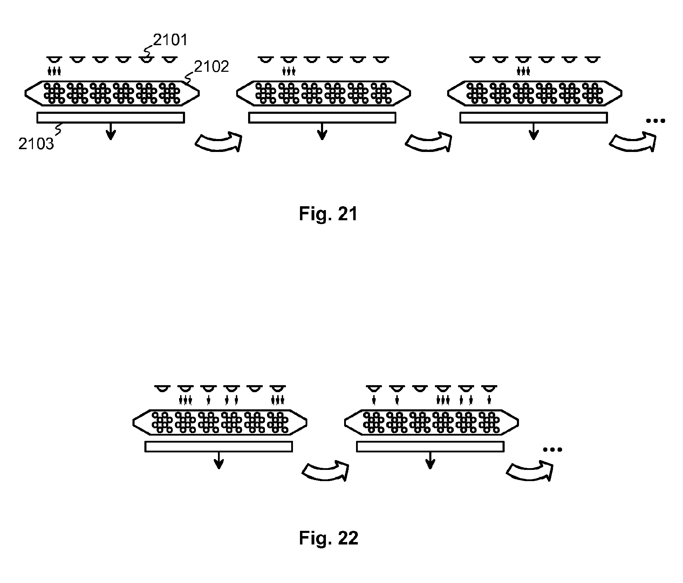

fig. 21 illustrates a possible measurement sequence,
fig. 22 illustrates another possible measurement sequence,
fig. 23 illustrates measurement results from an exemplary measurement,
fig. 24 illustrates measurement results from another exemplary measurement,
fig. 25 illustrates measurement results from another exemplary measurement,
fig. 26 illustrates measurement results from another exemplary measurement,
fig. 27 illustrates measurement results from another exemplary measurement,
fig. 28 illustrates measurement results from another exemplary measurement,
fig. 29 illustrates measurement results from another exemplary measurement, and
fig. 30 illustrates measurement results from another exemplary measurement.

### DETAILED DESCRIPTION OF EMBODIMENTS OF THE INVENTION

The term fingerprinting and its derivatives refer to the handling of a set of measured signals as an entity that represents the distinctive, identifying characteristics of the sample. The handling of the measurement signals may involve e.g. weighting, combining, and other kinds of processing of individual outputs of a measurement apparatus. Fingerprinting of non-specific signals refers to the recording of distinctive and identifying characteristics that do not necessarily have a direct physico-chemical explanation but the explanation follows from comparisons to a library of other fingerprints. A fingerprint may consist of one or several distinctive and identifying values.

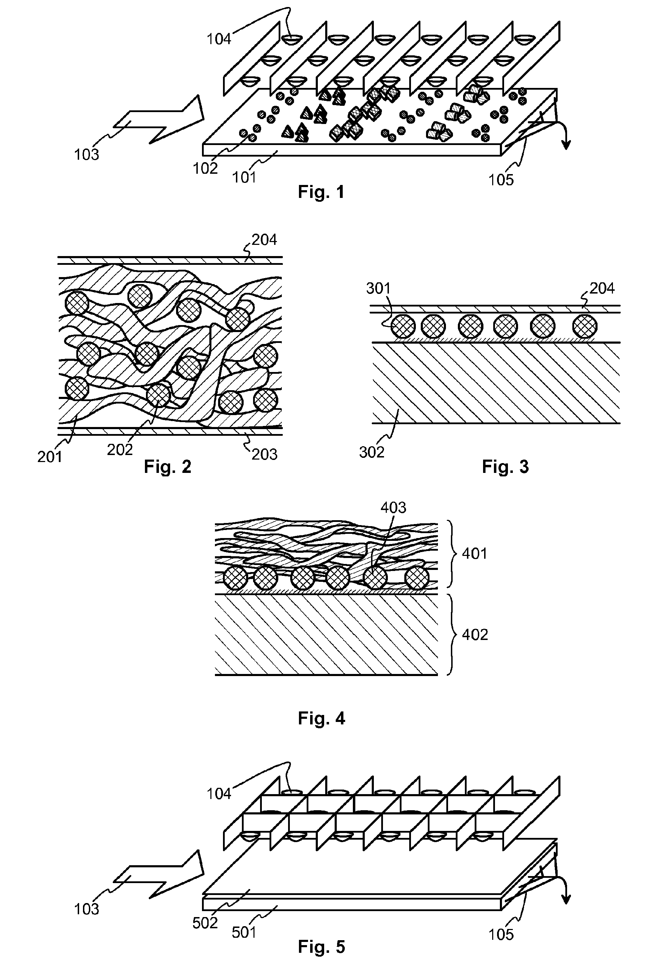

Fig. 1 illustrates schematically the principle of a device for holding a sample for optical analysis according to an embodiment of the invention. A basic approach taken in the case of fig. 1 involves making the device generally planar in form. It comprises a carrier 101, and a plurality of particles, of which particles 102 are shown as an example. The particles are immobilized within the carrier, where the concept of "within" must be understood in a wide sense to that the particles need not be physically inside the carrier material, but they may be located e.g. on one or more surfaces of the carrier. In order to enable analyzing liquid samples in a versatile manner, the particles define non-specific interacting surfaces that according to an embodiment of the invention are non-specific binding surfaces.

The terms non-specific interacting surfaces or non-specific binding refer to a binder or binders that are, in the context of a specific embodiment of the present invention, not specific: the selectivity of the binding is not predetermined. A binding surface, which in some other context is a specific binding surface, might in the context of the present invention be a non-specific binding surface due to that binding in the context of the present invention is not specific. Preferably the non-specific binders or binding surfaces of the present invention are not specific in any context. Specific binding surfaces can be used at least at some parts of the device.

In comparison, a specific binder comprises a molecular recognition element or elements that bind to an epitope of the analyte bound. In the context of this invention a specific binder only binds to similar epitopes, i.e. epitopes that are chemically and structurally similar. A specific binder does not bind to more than 10, preferably not more than 3, chemically and conformationally non-identical different epitopes. Most preferably a specific binder only binds to one specific epitope.

In the context of this invention the term to bind refers to binding wherein the binding constant is at least 10³ M⁻¹, preferably at least 10⁵ M⁻¹, more preferably at least 10⁷ M⁻¹ and most preferably at least 10⁹ M⁻¹.

Particles can be placed at arbitrary locations of the carrier, and different types of particles can be placed differently. The result is a distribution of non-specific interacting surfaces extending across the carrier. As an important difference to prior art structures that were based on spots or wells, the distribution of non-specific interacting surfaces can be made essentially continuous across the carrier, or at least across relatively large portions of the carrier. By controlling the way in which different kinds of particles are placed, it is possible to create any kinds of transitions between regions, including both sharp jumps from one particle type to another and gradient-type transitions where the predominant particle type changes smoothly from region to region. It is also possible to use intermediate material between regions of particles, so that the transition involves the end of one region, then no particles at all, and only thereafter a new region. The intermediate material may have an interacting function, or it may be just inert material in e.g. porous or fibrous form so that it allows the liquid sample to pass smoothly. One possible interacting function that an intermediate material may have is filtering. Also a region of the carrier where interacting surfaces do occur may have additional functions: for example, a region (typically at that side of the carrier where the incoming sample is introduced) may have a filtering function to remove unwanted matter such as cells or solid particles from the sample.

What the particles actually are may or may not be particularly important to the present invention. On the allegedly continuous scale from individual atoms and molecules through macromolecules, clusters, colloids, particles, and solids, particles of in the traditional sense of the word lie between macroscopic sizes and a diameter of approximately 50 nanometres. At diameters smaller than that the individual grains of matter become small enough to be called nanoparticles, and their interactions with other substances and with environmental conditions become predominantly nanotechnical. As such, the invention allows the use of nanoparticles, and they should for this purpose be included under the general interpretation of the word particle. A practical upper limit at the larger end of the size scale may come from the fact that the larger the particle, the less advantage can be gained from the available interacting surface per unit volume.

A very large variety of particles can come into question. Examples of particle types include but are limited to metal (such as gold) particles, glass spheres, polymer particles, silica particles, liposomes, and living organisms like bacteria or even fruit flies. Gel particles made of a cross-linked polysaccharide gel have been successfully tested, as well as carboxy microparticles. At the time of writing this description, an extensive selection of particles are commercially available from companies like Seradyn, Inc., Particle Technology Division, Indianapolis, USA.

One device for holding a sample may comprise particles of only one kind, or particles of different kinds. In many cases it is advantageous to have within the device particles that offer different kinds of interacting surfaces to the sample, so that the sample reacts in different ways at different parts of the carrier. Some typical reactions between the sample, the interacting surfaces, and the possible additional luminophore labels involved include, but are not limited to:
- direct binding: one of sample molecules and luminophore labels bind to the interacting surface much better than the other, resulting in either a luminophore-rich region or a region where essentially no luminophores appear,
- indirect binding: luminophore labels do not bind to the interacting surface, but sample molecules bind to both the interacting surface and the luminophore labels, resulting in a relatively high concentration of luminophores,
- selective binding: of two or more different kinds of luminophore labels, only one or only some bind to the interacting surface, either directly or indirectly,
- inhibition: sample molecules keep the luminophore labels from binding to the interacting surface,
- dissolving: sample dissolves a labeled substance from the interacting surface.

In the context of the present invention the term luminophore refers to an atom or atomic grouping in a chemical compound that manifests luminescence. The term luminopore label refers to the chemical compound that comprises the luminophore.

The arrow 103 in fig. 1 illustrates a direction in which a liquid sample is introduced to the device. We assume that the device comprises at least one fluidic channel that is configured to allow the fluid sample to flow through at least a part of the carrier 102 to get in touch with at least some of the particles. If we assume a steady, laminar flow of the liquid sample from left to right in fig. 1, the sample front will encounter all rows of different particles at a time, however so that the sample front that reaches a row of particles may have already at least partly interacted with the particles of the previous rows.

Fig. 1 illustrates also the principle of having radiating means 104 in a reader apparatus to which the device holding the sample will be placed for performing optical analysis. The radiating means 104, which may be for example ultraviolet LEDs, and the reader apparatus comprises means (not shown in fig. 1) for selectively switching the radiating means on and off, as well as preferably also means for selecting the intensity at which each location of the device holding the sample is illuminated.

According to an embodiment of the present invention, the device comprises one or more optical windows adjacent to the particles for enabling optical analysis of results the sample getting in touch with the particles. Here we may draw a difference between optical windows for entering the radiation stimuli and optical windows for collecting the luminescent response. As a limiting case at least one of these may be the open surface of the device. For example in the schematic illustration of fig. 1 the"optical window" for entering the radiation stimuli is the open top side, which allows the particle-populated areas to be directly irradiated.

Typically it is more advantageous to have the carrier covered with a layer that e.g. keeps volatile components of the sample from evaporating in uncontrolled fashion. A layer of the carrier that is transparent to at least one wavelength of optical radiation is a practical part to be used to define said one or more optical windows. The optical windows for entering the radiation stimuli may comprise regions of the covering layer that are essentially transparent to electromagnetic radiation at the wavelength used for excitation. Fig. 1 does not separately illustrate such a covering layer for reasons of graphical clarity, but taken that the size of the particles in fig. 1 in relation to the carrier is exaggerated in fig. 1, it is easy to imagine the covering layer between the carrier and the radiating means.

In the schematic illustration of fig. 1 the optical windows for collecting the luminescent response are the parts of the carrier 101 that are directly below the particles. In this particular embodiment we assume that the layer below the particles is transparent to electromagnetic radiation at the wavelength(s) of luminescent response. The carrier has thus an optical function: it acts as a light guide. That part of the luminescent response that is radiated generally downwards gets coupled into the carrier material and is conducted therein towards the rightmost end of the carrier, where it exits the carrier according to arrow 105. We assume that the reader apparatus used to perform the optical analysis comprises a detector (not shown in fig. 1) configured to receive and detect what comes in through the optical windows for collecting the luminescent response.

Fig. 2 is a schematic cross-sectional illustration of a part of a carrier that has individual particles immobilized within a matrix defined by a structural material of the carrier. In particular, a structural material of the carrier in fig. 2 is porous or fibrous, which in fig. 2 is illustrated by the cross-sections of a plurality of sporadically intewoven, elongated pieces of material 201. The empty spaces left between the elongated pieces of material constitute pores of said structural material, and individual particles 202 are immobilized within the pores. The pores are small enough to constitute a capillary propagation route for a fluid sample through the pores. We may thus say that the structural material of the carrier defines in itself the at least one fluidic channel, along which a fluid sample may flow through at least a part of the carrier to get in touch with at least some of the particles.

The porous or fibrous structural material is in the embodiment of fig. 2 enclosed between covering layers 203 and 204, one of which is transparent at least at a wavelength of electromagnetic radiation used for excitation. The other is transparent at least at a wavelength of electromagnetic radiation that is typical of a luminescent response to be detected. Said transparency of the covering layers may extend continuously across to the respective covering layer, or it may occur locally at multiple locations of the carrier. In both cases the covering layers define the one or more optical windows adjacent to the particles for enabling optical analysis of results of the sample getting in touch with the particles at multiple locations of the carrier.

Fig. 3 illustrates an alternative approach, in which individual particles 301 are immobilized within the carrier through being chemically bonded on a surface offered by a structural material 302 of the carrier. Also in this case we assume that there is a covering layer 204 on top of the carrier, although that is not obligatory. The fluidic channel, along which a fluid sample may flow through at least a part of the carrier to get in touch with at least some of the particles, may be implemented in various ways. For example, the space left between the structural material 302 and the covering layer 204 may be utilized either as such or by defining a network of channels limited by walls within said space.

Fig. 4 illustrates a kind of cross-breed embodiment between the approaches considered above in association with figs. 2 and 3. Here the carrier comprises a porous layer 401 adjacent to an impermeable layer 402. The particles 403 are immobilized on a surface of said impermeable layer 402 for example through chemical bonding. A capillary propagation route through pores of said porous layer 401 define said at least one fluidic channel.

The intensity of electromagnetic radiation that is available for optical excitation in a reader apparatus is typically far greater than the intensity of luminescent response that will be obtained. Therefore with a carrier that has a structure according to fig. 4 it is still possible to direct the excitation radiation towards the particles 403 from above, even if some of the excitation radiation would get absorbed in the porous layer 401. Thus those regions of the porous layer 401 that have particles 403 below them constitute the optical windows for entering the radiation stimuli. Analogously with the structure shown in fig. 3 we assume that the impermeable layer 402 is transparent at wavelength(s) of luminescent response, so that regions of the impermeable layer 402 that have particles 403 above them constitute the optical windows for collecting the luminescent response.

Fig. 5 illustrates schematically an alternative approach to setting up the non-specific interacting surfaces. The general principle illustrated in fig. 5 involves using a membrane 502, instead of (or in addition to) particles, as the vehicle the surface(s) of which offer the non-specific interacting surfaces. The membrane 502 may consist of a coating that extends across the whole or a part of a separate carrier, or - if the membrane is mechanically strong enough - the membrane may itself constitute the carrier. Similarly if either the membrane itself or a separate carrier is porous or fibrous, the network of voids within the porous or fibrous material may define a capillary propagation route therethrough that acts as the fluidic channel for the sample to flow through. The non-specific interacting surfaces may be created on the membrane for example by using one or more coatings.

In fig. 5 we assume that the membrane, or the combination of a membrane and a separate carrier, is transparent enough to electromagnetic radiation so that it may be irradiated from one side with optical excitation radiation, and a luminescent response may be collected from the other side. Thus the reading apparatus is assumed to comprise an array of excitation means 104, and light collection optics 501 for collecting the luminescent responses and for conducting them to detection according to arrow 105, between which the device will be placed for performing the analysis. Transparent cover layers are not shown in fig. 5 for graphical clarity, but just like in the case of a particle-laden carrier, they may be needed to keep volatile components of the sample from evaporating in uncontrolled manner. If cover layers are not used, the open surfaces of the membrane may be considered to define the optical windows through which an arbitrary location of the membrane can be subjected to measurement. If a covering layer or covering layers are used, they define the one or more optical windows adjacent to the non-specific interacting surfaces for enabling optical analysis of results of a sample getting in touch with said non-specific interacting surfaces at multiple locations of the membrane/carrier.

An alternative measurement geometry might include excitation means and light collection optics on the same side of the carrier, in which case no transparency of the carrier would be required. This applies to all embodiments of the invention where the carrier has a generally planar form. An alternative to having multiple excitation means would be the use of very strictly located excitation means, e.g. only a single LED, together with a controllable x-y table that was configured to move the device so that each time the appropriate location of the device was subjected to excitation and detection of luminescent responses.

In the embodiment of fig. 5, the whole membrane 502 may be homogenous with respect to the non-specific interacting surfaces it offers, or it may offer a distribution of different kinds of non-specific interacting surfaces. As with particles, in the last-mentioned case the transitions between non-specific interacting surfaces of different type may be sharp or smooth. Using a membrane-type embodiment for heterogenous measurements may necessitate washing the membrane between sample introduction rounds. Even if the whole membrane would be homogenous, it would be advantageous to optical windows and excitation means at a number of locations, because the sample that has already propagated across a significant portion of the membrane may give a completely different response than what was obtained at the edge where the sample was first introduced.

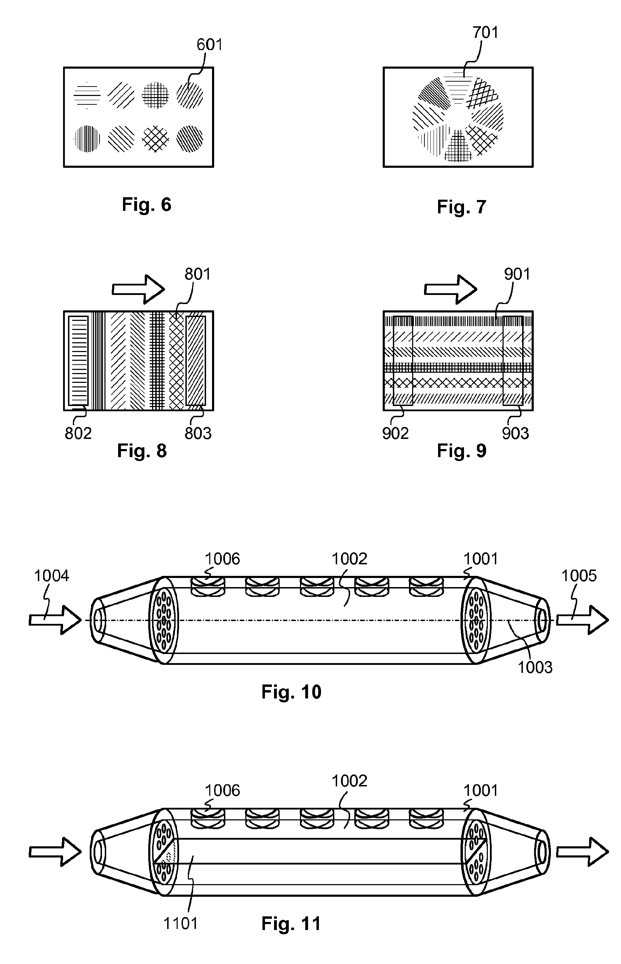

Figs. 6 to 9 illustrate examples of the wide variety of possibilities in defining the regions of a planar carrier where the particles reside, or where the membrane offers interacting surfaces. It is common to all embodiments illustrated in figs. 6 to 9 that a structural material of the carrier has the form of an essentially planar layer, and the non-specific interacting surfaces have an essentially two-dimensional distribution within a plane defined by said structural material. Further in each of figs. 6 to 9 the device comprises different types of interacting surfaces within different regions. In particle-based embodiments this means that there are particles of several different types, wherein the type of particle is defined by the type of interacting surface it offers to a sample, and particles of same type form continuous areas that extend across a region of said structural material. In membrane-based embodiments that for example different chemical substances have been used to coat different regions of the membrane.

Although all regions are here shown with different hatching, the device may have also multiple regions with the same type of non-specific interacting surfaces. Additionally it is not necessary to have only one type of non-specific interacting surfaces within a region, but within at least some of the regions there may be a mixture of two or more different types of surfaces.

In the embodiment of fig. 6 the regions have the form of spots 601, so by its graphical layout the device resembles prior art devices where interacting surfaces were offered by the coatings of spots or wells. This form of a device may be advantageous because it may be compatible with prior art reader apparatuses with few or no modifications. In the embodiment of fig. 7 the regions have the form of sectors 701. A fluid sample will be introduced in the empty space in the middle, from which it can flow symmetrically to all directions. This form of a device may offer particular advantages, because if the flow of the sample is properly controlled, the sample will enter all regions simultaneously and in the same way. Control of the flow of the sample may be achieved for example by placing the device to a centrifuge with the rotating axis passing through the middle of the sample holding device. Although not separately illustrated, in the embodimenst of figs. 6 and 7 the device should have optical windows adjacent to the non-specific interacting surfaces within each spot or sector for enabling optical analysis of results of the sample getting in touch with the non-specific interacting surfaces at respective locations of the carrier.

In figs. 8 and 9 the arrow illustrates the intended sample flow direction. Thus in the embodiment of fig. 8 the regions have the form of stripes 801 perpendicular to the sample flow direction, and in the embodiment of fig. 9 they have the form of stripes 901 parallel to the sample flow direction. The embodiment of fig. 8 may be advantageous, because it offers the possibility of investigating sequential interactions that the sample will exhibit with different kinds of non-specific interacting surfaces. If the device has an optical window at location 802, it enables optical analysis of results of the sample in its original form getting in touch with the non-specific interacting surfaces of the first region. After the fluid sample has flown through the whole device, at location 803 it is not any more the same sample that entered the device, because it has interacted with the non-specific interacting surfaces in all intermediate regions. Such behaviour can be utilized for example by allowing some of the preceding regions to deplete the sample of components that would otherwise easily mask the weak reactions that are to be anticipated at the last region. Naturally the device may have optical windows corresponding with all regions, between the locations 802 and 803.

The embodiment of fig. 9 may be advantageous, because it offers the possibility of investigating the gradient of interactions between the sample and the interacting surfaces. If the device has an optical window at location 902 (or a multitude of optical windows in a row, so that an individual optical window corresponds to each stripe), assumedly relatively strong interactions will be observed, because at that part of the device the sample has just entered the device and essentially no sample molecules have undergone any interactions yet. At location 903 a relatively large portion of the sample molecules and/or label substances may have undergone interactions already, so the observed interactions will be probably much weaker. As with the embodiment of fig. 8, there may be any number of optical windows also between the locations 902 and 903.

Concerning all embodiments of the invention discussed so far, it should be noted that the device may have optical windows also at locations where no non-specific interacting surfaces are located, for the purpose of making optical measurements of the sample as it is at the respective location. According to an embodiment of the invention there are two such windows: a "preliminary" optical window may be located before any non-specific interacting surfaces in the sample flow direction, to enable making optical measurements of the sample before it has undergone any interactions. An "end result" optical window may be located after all non-specific interacting surfaces in the sample flow direction, to enable making optical measurements of the sample after it has undergone all possible interactions that it can within the device. An optical window after all interactions have taken place enables also measurements known from prior art, e.g. from liquid chromatography, to be combined with fingerprinting analysis according to the invention.

Fig. 10 illustrates schematically a different approach to the structure of a device for holding a sample. Instead of being solid and generally planar like in the embodiments described so far, the carrier 1001 of the device in fig. 10 is hollow and defines a compartment 1002 that is closed tightly enough so that once filled with e.g. particles and completed, it will not let particles out. In other words at least one group of particles will become immobilized within the compartment defined by the carrier. A device with a hollow, tubular carrier can be called a column.

The fluid sample should be let to flow into and through at least part of the carrier. To that purpose the carrier has a tubular form that defines a sample flow direction, which is essentially parallel with a longitudinal axis 1003 of said tubular form. The longitudinal axis is horizontal in fig. 10, and the arrows 1004 and 1005 illustrate further the intended sample flow direction. When there are particles (not shown in fig. 10) immobilized within the compartment defined by the carrier, the matrix of empty space remaining between the particles and limited by the inner surface of the carrier constitutes the fluidic channel that according to an embodiment of the invention is configured to allow a fluid sample to flow through at least a part of said carrier to get in touch with at least some of said particles.

The tubular form offers a variety of possibilities to implement one or more optical windows adjacent to said particles for enabling optical analysis of results of said sample getting in touch with said particles at multiple locations of the carrier. A very straightforward alternative is to make the whole carrier of a material that is transparent to electromagnetic radiation at wavelengths of both excitation radiation and luminescent responses. Such a solution would give maximal freedom in selecting the physical configuration of radiating means and detector(s) in the reader apparatus. Fig. 10 illustrates a slightly more elaborate alternative, in which certain portions of a side wall of the carrier are made of a different material than the rest of the carrier. For example, the portions - of which portion 1006 is shown as an example - can be made of an acrylate, such as polymethylmethacrylate (PMMA), which is transparent to typical wavelengths of excitation radiation. The rest of the carrier can be made essentially transparent to luminescent emission radiation but non-transparent to the excitation radiation by making it of polycarbonate (PC).

Details of the form shown in fig. 10 are exemplary only and do not indicate any technical limitations that would be inherent to this embodiment of the invention. For example the perforated end walls of the straight cylindrical part of the carrier are shown as only one example of ensuring that particles will not enter the tapered end parts. Likewise the end parts need not be tapered at all, but they may have some other form. It is not even essential to ensure that particles would not enter the end parts, although in order to standardize the measurement geometry it may be advantageous to ensure that each part of the carrier that will include particles has as regular a form as possible.

Fig. 11 illustrates schematically a similar principle but using a membrane instead of particles. The carrier 1001 of the device in fig. 11 is similar to that in fig. 10, i.e. it is hollow and defines a compartment 1002, but now there is a membrane 1101 that extends across the carrier in its longitudinal direction. The membrane 1101 may be similar to membranes explained earlier in association with planar carriers, but this time there is naturally no need for e.g. capillary propagation because the sample will flow within the compartment 1002 that now acts as the channel for the sample to flow through. If the dimensions resemble those illustrated in fig. 11, so that the transverse cross-section of the compartment is large compared to the transverse cross-section of the membrane, it should be noted that little difference in interactions will occur in the longitudinal direction, because large amounts of the sample may flow all the way through the sample without even becoming into contact with the membrane. If more interactions are desired, it is naturally possible to use several membranes or to place one or more membranes so that the sample must pass through the membrane proper in order to reach the other end of the carrier.

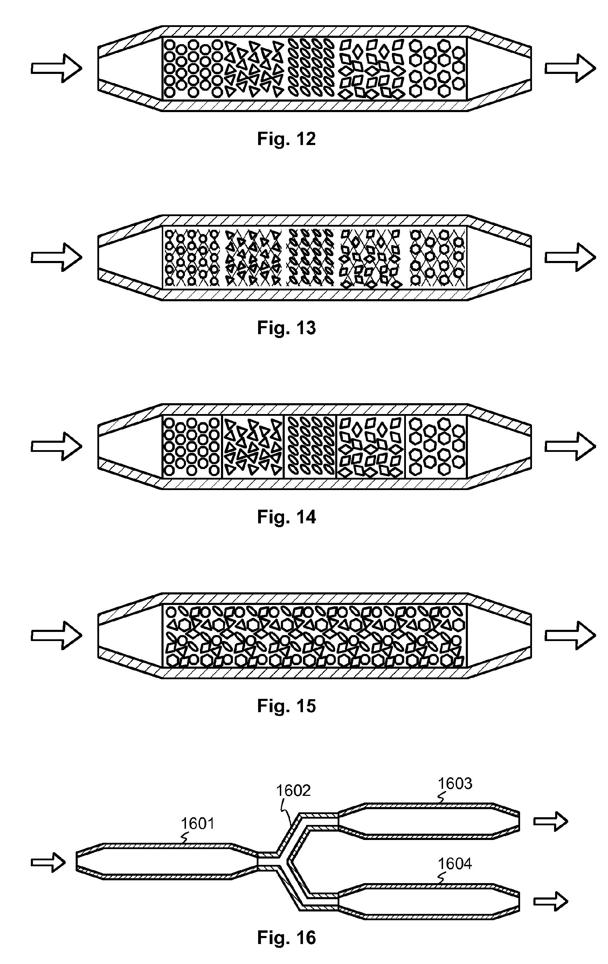

Fig. 12 is a schematic cross-section that shows one possibility of having different types of particles immobilized within a carrier of the kind illustrated above in fig. 10. The type of particle is defined by the type of interacting surface it offers to a sample. The carrier defines a single compartment, and particles of different types are confined together in said single compartment. In practice the different types of particles have been put inside the straight cylindrical part of the carrier one type at a time, so that eventually they form a sequence of particle zones that are essentially perpendicular to the longitudinal axis, and consequently also perpendicular to the sample flow direction. The perforated end walls keep the ends of the particle zones in place, but otherwise there is nothing else than the tight packing of the particles that keeps them from being mixed with each other.

Fig. 13 illustrates an alternative embodiment, in which active measures have been taken to keep the different types of particles from mixing with each other. A plurality of particles of the same type have been further immobilized within an immobilizer, such as hydrogel or other substance that is solid enough to immobilize particles but porous enough to let the fluid sample flow through. The "chunks" of particle-laden hydrogel have been put into the compartment one after the other. Fig. 14 illustrates a yet more definite way of separating the different types of particles. Here the carrier defines a number of separate compartments, and particles of a particular type are confined in a compartment of their own, separate from particles of other types. The separating walls between compartments may be e.g. similar perforated walls as those shown at the ends of the single, large compartment in fig. 10.

It should be noted that the invention does not actually require separating different types of particles sharply, or even separating them at all. An example of other than sharp separation would be diffuse separation, in which particles of different types would be allowed to slightly mix with each other at and close to the plane separating them. Fig. 15 illustrates an embodiment of the invention where different types of particles have been mixed together, and the compartment defined by the carrier has been filled with the mixture of particles. However, care must be taken to ensure that the mixture of particles will be homogenous, not only at the time of filling the compartment with it but also later. If the packing of the particles allows any mobility, and if the particles are of different sizes and/or weights, they would tend to get arranged by gravity during transport and storage. Using hydrogel or a similar agent to further immobilize the particles inside the compartment may offer a solution to this kind of problems.

Using a compartment of the carrier to immobilize particles underlines the appropriate interpretation of the term to immobilize in the framework of the present invention. For example in the embodiment of fig. 14, where particles of specific kind are enclosed in a compartment of their own, an individual particle is allowed to move freely within the compartment. It is only "immobilized" in the sense that it is not allowed to move within the carrier from one compartment to another. Each compartment is a potential measurement location, and the measurement should give information about how the sample interacts with the interacting surfaces that are meant to be present at just that measurement location. In general we may thus say that the particles are immobilized in the sense that they are not allowed to move uncontrollably from one potential measurement location to another.

A carrier of the generally tubular kind makes it possible to have a larger cross-section of the fluid channel than a device of the generally planar kind. One reason is because in the latter the fluid channel is close to two-dimensional, while in a tubular device it is truly three-dimensional. Even if the carrier is filled with particles, if the particles are large enough, a relatively large amount of free space will be left around them. A larger cross-section of the fluid channel enables a significant flow of the fluid sample all the way through the device, which in turn makes it possible to couple a number of devices together to form chains and/or networks and to still get a good flow of the fluid sample through each device. Fig. 16 is an exemplary illustration where the fluid sample will flow first through the first device 1601, then branch into two component flows in the divider 1602, after which half of the fluid sample will flow through a second device 1603 and the other half through a third device 1604.

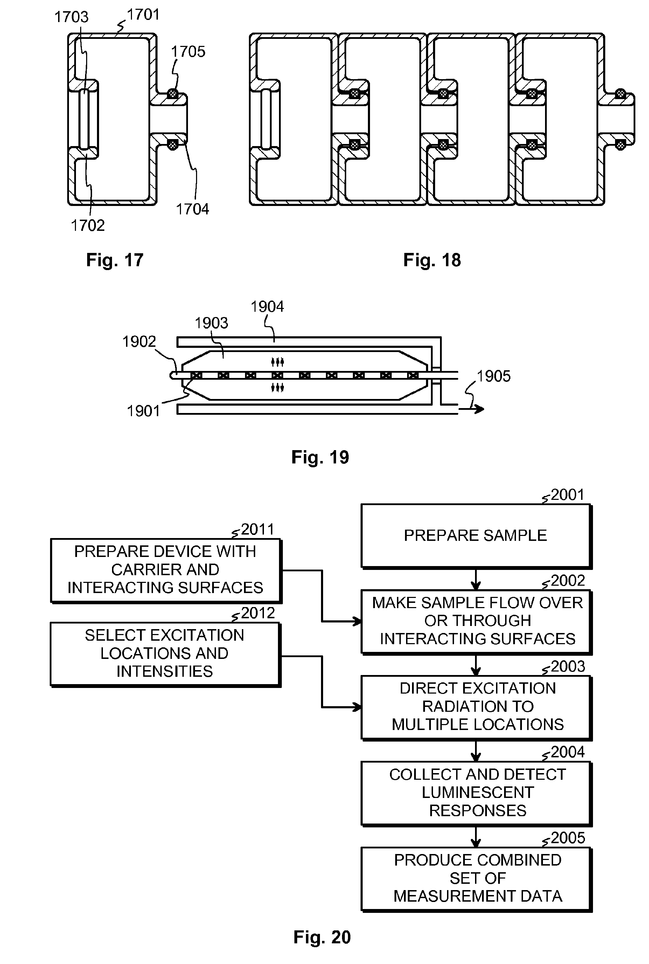

Figs. 17 and 18 illustrate an exemplary principle of composing a generally tubular carrier by clicking together separate compartment cells, which could also be called cartridges. Fig. 17 is a schematic cross-section of a cartridge 1701, the general form of which is that of a short, straight cylinder. Exemplary mechanical attachment means are provided at the two opposite side faces of the cylinder. Here the left-hand face comprises an inwards pointing sleeve 1702, an inner surface of which comprises a circular groove 1703. The right-hand face of the compartment cell comprises an outwards protruding stem 1704, with a gasket 1705 fitted around it in another circular groove. Fig. 18 shows how the assembled carrier comprises a combination of compartment cells of the kind shown in fig. 17, attached together through the mechanical attachment means: the stem of one compartment cell fits in the sleeve of the other, with the gasket locking them in place. Building the mechanical attachment means this way means that they also define parts of the fluidic channel for allowing a fluid sample to flow from one compartment cell to another. Perforated walls at the openings can be used to ensure that particles, if used, will not migrate from one compartment cell to another.

The "snap-together" type carrier of fig. 18 opens the way to particularly easy experimenting and optimizing of sample-holding devices. Starting from scratch, it is not always easy to know, what kind of combination of interacting surfaces, and in which sequential order, would be the best possible for analysing some particular sample or class of samples. In prior art, this typically meant a laborous trial-and-error process of having made a large number of complete, integral sample-holding devices, many of which proved to be of no use. The "snap-together" embodiment of the present invention allows taking ready-made compartment cells from a kind of builder's set, snapping them together in various compositions, and using these to make the experiments. Once the best-working composition for a particular purpose has been found, actual analyses and measurements can be made thereafter either by using similar compositions snapped again together from compartment cells, or by ordering complete, integral sample-holding devices with that order of those non-specific interacting surface types that were found optimal in the snap-together experiment.

In the snap-together approach of figs. 17 and 18, as well as in all other embodiments of the invention, it is possible to have one or more compartments of the carrier free of non-specific interacting surfaces for allowing an optical measurement of a fluid sample alone.

Fig. 19 is an example of how embodiments of the invention allow a very large degree of freedom in placing the excitation sources and the detecting means. Here the excitation sources are LEDs 1901 built in an elongated holder 1902 that will be located along the centerline of a cylinder-formed device 1903 for holding the sample. The device 1903 may generally resemble e.g. one of the particle-filled devices of figs. 12 to 15, with appropriate modifications if necessary to allow placing the elongated holder 1902 in a cavity along the longitudinal axis of the device. The optical window(s) for allowing excitation radiation to reach the locations where the sample has been in touch with the interacting surfaces consists or consist of a suitably transparent inner cylindrical surface of the carrier. The detecting means (or the light guide for conducting the luminescent response to the detecting means) forms a cylinder 1904 that encloses the device 1903, collects luminescent responses and outputs either a detection signal or - if it acts as a mere light guide - the collected luminescent responses as illustrated with arrow 1905. The optical window(s) for allowing luminescent responses to reach the detecting means consists or consist of a suitably transparent outer cylindrical surface of the carrier. Various other alternetives are possible, including but not being limited to switching the inside/outside roles of the excitation sources and the detecting means in fig. 19.

Fig. 20 is a flow diagram of a method according to an embodiment of the invention. Preparing the sample at step 2001 includes all those steps and actions that are necessary and/or advantageous for e.g. ensuring a suitable consistency and processability of the sample, like diluting a sample substance in an aqueous buffer. Step 2002 involves making the sample flow over or through a distribution of non-specific interacting surfaces that extend across a carrier. Flowing over a distribution of non-specific interacting surfaces comes into question mainly in the case of membrane-type carriers where the interacting surfaces are implemented in a membrane and where the membrane is not in itself perforated or porous. Flowing through a distribution of non-specific interacting surfaces takes place in all those embodiments if the invention where the interacting surfaces are distributed in truly three dimensions, like on the surfaces of particles that are immobilized within a compartment or on the surface of a planar carrier. The reason is in all cases to allow the sample to get in touch with at least some of the non-specific interacting surfaces, so that interactions of the intended kind have a chance to occur.

Step 2003 involves directing optical excitation radiation to multiple locations of the carrier where the sample has got in touch with at least some of the non-specific interacting surfaces. Previously in the description it has been already pointed out that excitation radiation may be deliberately directed also to locations where it is known that no interactions occur, for example to a compartment where there are no particles; to a portion of a planar carrier where there is no membrane, no coating, or no particles; or to an otherwise provided part of the carrier where the sample is found in essentially "pure" form. Embodiments of the invention may differ from each other with respect to whether the excitation is performed one location at a time or at multiple locations simultaneously, which will be described in more detail later.

Concerning the relation of steps 2002 and 2003 it should be noted that the invention encompasses embodiments where significant portions of the sample are still there when the measurement begins, but also embodiments where the device has been essentially drained and in some cases even carefully dried so that the measurement takes place in a dry state. Also some embodiments of the invention may involve repeated rounds through step 2002, either with the same sample or with another sample that should be analysed in combination of it. There may also be rinsing and washing steps, if required.

Step 2004 involves collecting and detecting luminescent responses from locations of the carrier which were subjected to the optical excitation radiation. Time-gated detection is advantageously used, so that the actual detection of luminescent responses is only started after the excitation means have been shut off. One reason for time-gating is that otherwise some of the excitation raditaion might enter the detector and become misinterpreted as luminescent emission radiation. It is also possible that some short-lived autofluorescence in the sample (or some other involved material, like the structural materials of the carrier) takes place during and immediately after the excitation radiation pulse, which should not be confused with the desired emission radiation from the luminophore label(s). Autofluorescence decays typically much faster than the emission radiation from luminophore labels, so it can be avoided by time-gated detection. Yet another possible reason to use time-gated detection is the possibility of measuring the emission radiation during two or more different time intervals of a single emission period, which gives information about the decaying rate and lifetime of the emission radiation.

Additionally the Rayleigh and Raman scattering of the excitation radiation must be taken into account. Raman scattering involves a Stokes shift due to the inelastic scattering mechanism, and is thus susceptible of introducing interference to such fluorometric measurements where the detector is active simultaneously with the introduction of optical excitation. It is believed that Raman scattering will set an absolute limit of about 10⁻¹⁰ M to the sensitivity of simultaneous fluorometric measurements unless sophisticated techniques from e.g. single molecule detection are used.

Step 2005 involves producing a combined set of measurement data that is indicative of the luminescent responses. The aim is to use the combined set of measurement data to characterise the sample. In many cases the measurement is made for sample identification, i.e. to identify, which one of a set of previously known samples did this particular sample come from. A slightly different possibility is the comparison of a sample to one or more known samples, so that differences to the known samples are looked for through the fingerprinting. The combined set of measurement data should be descriptive enough so that for each time a particular sample (for example: a particular brand of a drinkable liquid) comes to the measurement, the same or very similar combined set of measurement data is obtained.

On the left side in fig. 20 are the step 2011 of preparing a device that has a carrier and interacting surfaces, and the step 2012 of selecting the locations and intensities for the excitation radiation. A trivial form of step 2012 is to decide that each available excitation means is individually switched on at its turn, and at some constant intensity. This way the step 2003 of directing optical excitation radiation to multiple locations of the carrier will comprise selectively irradiating a number of locations with optical excitation radiation one location at a time. However, advantages may be gained in measurement efficiency by selecting the excitation locations and intensities suitably.

Concerning the last-mentioned aim, figs. 19 and 20 illustrate a comparison between measurement methods where one either switches on one excitation radiation source at a time (fig. 19) or uses combinations of excitation radiation sources switched on simultaneously, possibly with different intensities (fig. 20). The last-mentioned alternative may prove especially advantageous if the reader apparatus comprises detecting means that are common to and can thus detect luminescent photons from a multitude of excitated interacting surfaces simultaneously. In the schematic representation of figs. 19 and 20, the excitation sources 1901 are arranged in an array or row on one side of a device 1902 for holding the sample, and the detecting means 1903 are on the other side.

We may recall that using either particles or a membrane to set up a distribution of non-specific interacting surfaces brings about a particular "mobility" with respect to where within the carrier the interesting interactions will occur: not only in some predetermined spots or wells, but somewhere at an arbitrary location within said distribution. For example, it may occur that neither of two pure interacting surfaces produces quite satisfactory results for measurements, but at a border zone that exhibits a smooth transition from one particle type to another, or one region of a membrane to another, a very significant interaction takes place.

If there are sufficiently many separately controllable sources of excitation radiation in the reader apparatus, the analysis may involve a phase where a device holding a sample is selectively irradiated at a large number of different locations in turn, and the respective luminescent responses are detected and measured. The combined response that describes, what kind of luminescence was obtained as a result to each different excitation stimulus, constitutes the so-called fingerprint of the sample. From a statistical analysis of responses to a number of excitation rounds with individual excitation sources it may be possible to derive one or more statistical descriptors that characterise a plurality of individual measurement results of luminescent response. If nothing else than individual excitation is aimed at also in the future, these statistical descriptors can be output as the combined set of measurement data.

However, the statistical descriptors are also a way to constitute subgroups of excitation sources. The definition of each subgroup would precise, which excitation sources should be switched on and at which intensity. The combination of luminescent responses to excitation with well-defined subgroups of excitation sources may prove to be quite as accurate in identifying samples as the fingerprints that list responses to excitations with individual excitation sources. Performing the excitation by subgroups, rather than by one excitation source at a time, may significantly speed up analyses, because fewer excitation rounds would be needed. If the irradiation intensities have been selected to reflect the relative significance of luminescent responses obtained from corresponding locations of a measured reference sample, a list of luminescent response measurement results from the irradiating of a number of locations simultaneously can be directly output as the combined measurement data that characterises the sample.

In some cases the fingerprint of a sample may be a combination of measurement data from analysing two or more devices, where the same sample has been subjected to the same or different kinds of interactions. Using two identical devices for parallelly analysing the same sample adds redundancy and decreases the effect of statistical fluctuation of interactions on the analysis. Using two devices with different kinds of interactions, for example with the same interacting surfaces but in a different order, gives more dimensions and versatility to the analysis. Yet another possibility for "combinatorial fingerprinting" is to make one measurement with a portion of the sample, then let the sample age in documented conditions for a given time, and to make another measurement (with a similar or different selection of interacting surfaces) thereafter.

Variations to the exemplary embodiments of the invention are possible without parting from the scope of protection defined by the appended claims. As an example, most of the examples above have illustrated a multitude of optical windows, each optical window corresponding with a location of the device where results of the sample getting in touch with the non-specific interacting surfaces should be analyzed optically. As an alternative it is possible to have fewer optical windows, or e.g. only one optical window which is large enough to optically analyze all locations of interest within the device.

A further class of variations to the above-described embodiments involves using something else than electromagnetic radiation in the optical range as an excitation signal. An optical response such as luminescence can be invoked for example by using a localized magnetic field as an excitation signal. Paramagnetic particles can be used on the carrier, so that their properties perturb the magnetic field. Also excitation signals in electric form can be used, for example by subjecting the sample-laden carrier to an electric field, connecting it to an electric voltage, or inducing electric currents within the carrier, particles, or membrane. Silicon-based particles may be doped to have P- or N-type conductivity like in electronic semiconductor components.

### EXAMPLES

### Example 1: Particles and membrane

### 1 a: Microparticles for microtiter plate assays

2 mL of 10% solids of carboxylated microparticles (3.1 µm in diameter, Seradyn, Indianapolis, IN) were incubated with 5 mL of 2% solutions of epomin 1,800 (Nippon Shokubai, Osaka, Japan) or Triton X-100 (Sigma-Aldrich, St. Louis, MO) at room temperature for 2 hours. The particle suspensions were transferred to 1.5 mL centrifugal tubes and centrifuged using 5,000 rpm for 1 min. The solution was removed and 1 mL of MilliQ water was added, mixed and centrifuged. The protocol was repeated four times. In addition, Sephadex-25 particles from NAP-5 columns (GE Healthcare, Waukesha, WI) and silica particles (6.84 µm in diameter, Bangs Laboratories, Fishers, IN) were applied to the microtiter plate assays. These particles were washed 3 times with MilliQ water and no coating was applied.

### 1 b: Particles for column assays

Amberlite MB-1 (MB-1, Sigma-Aldrich), AG-501 silica (AG, Bio-Rad, Hercules, CA) and concanavalin coated Sepharose 4B (Con, GE Healthcare).

### 1 c: Membrane for membrane assays

10 µL of 10 µM BSA solution in MilliQ water and 1% solutions of epomin 1,800 (Nippon Shobukai), polyacetic acid, polyallyl amine hydrochloride, d-sucrose and Triton X-1 00 (Sigma-Aldrich) were applied as a lane (approximately 5 x 20 mm) on a nitrocellulose membrane (HiFlow Plus, Millipore, Billerica, MA) having a dimension of 90 x 20 mm. The 20-mm dimension of the lane was equal to the width of the membrane. The solutions were dried and used immediately to the membrane assays.

### Example 2: Columns

One milliliter plastic syringes (Plastipak, Becton Dickinson, Franklin Lakes, NJ) were used as columns. First a stopper was inserted to the column to hold particles inside or to separate particles from one particle lane to another. Columns having stoppers at both ends were prepared (column without intermediate stoppers). Columns having stoppers at both ends and in between each particle lane were also prepared (column with intermediate stoppers). Black towel from Luhta (Aalto, 100% cotton, Lahti, Finland) was chosen as a stopper material due to a low time-resolved fluorescence background signal. Each particle lane in a column was approximately 10 mm in length.

Single particle cartridges were prepared using 1000 µL clear graduated pipette tips (VWR, Finland). Black towel was used to hold particles in each tip.

### Example 3: Samples

Water samples: deionized MilliQ water was from MilliQ (Academic, Millipore), Evian (Natural mineral water, Evian , France) and tap water (Turku, Finland)

Tea samples: Twinings Earl Grey (Twinings, Valora Trade Finland, Helsinki) and Lipton Earl Grey (Unilever, Finland) teas (1.9 g) were added to boiling water and incubated without heating for 5 min. The samples were decanted twice and the supernatant was diluted to MilliQ water for analysis.

Twinings is a registered trade mark of R. Twining and Company Ltd., London, United Kingdom. Lipton is a registered trade mark of Unilever N.V., Rotterdam, the Netherlands. Evian is a registered trade mark of Société anonyme des eaux minérales d'Evian, Evian, France.

### Example 4: Water sample analysis using particles in microtiter plates

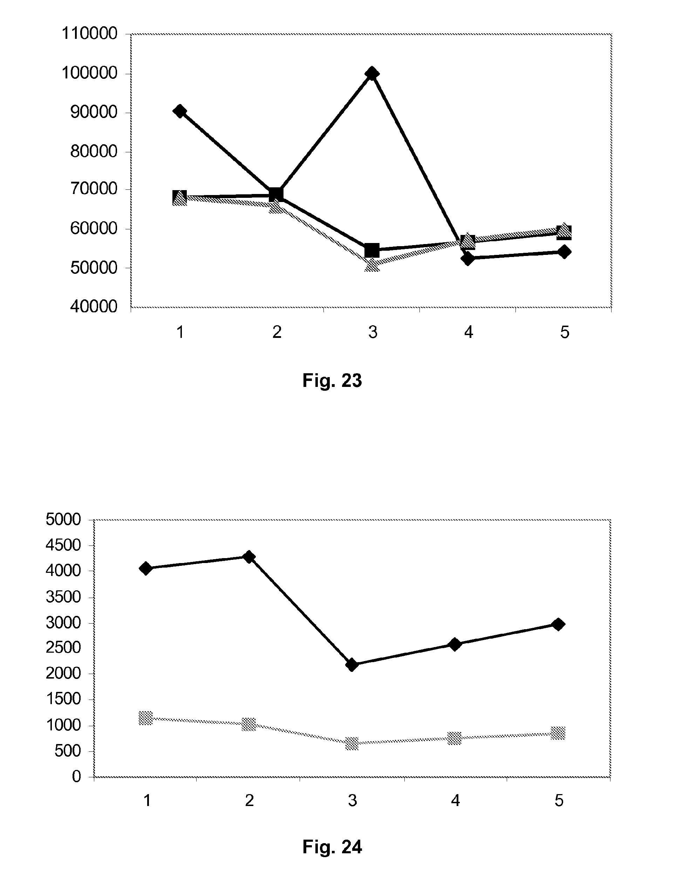

First, second, third, fourth, and fifth interacting surfaces were created using non-coated (1), Triton X-100 coated (2) and epomin 1,800 coated (3) carboxy, Sephadex (4) and silica (5) microparticles (5 µL of 5% solids). These were incubated with MilliQ water, Evian bottled water and Turku tap water samples in a total volume of 365 µL containing 300 µL of water sample, 30 µL of 12 nM Eu chelate ((2,2',2",2"'-[(4'-phenyl-2,2',6'2"-terpyridine-6,6"-diyl)bis(methylenenitrilo)]tetrakis (acetic acid))) and 30 µL of 5 mM phosphate buffer pH 3. The suspension was incubated for 5 min, transferred to a clear maxisorp NUNC microtiter plate (Roskilde, Denmark) and measured for long-lived luminescence signal at 614 nm using a Victor2 time-resolved fluorescence plate reader. The excitation wavelength was 340 nm, the delay time of the measurement was 400 µs and the integration time was 400 µs. Fig. 23 illustrates the counted luminescent photons, with the graph through diamonds representing the MilliQ water, the graph through squares representing the Evian bottled water, and the graph through triangles representing the Turku tap water. The numbers 1 to 5 on the horizontal axis represent the respective interacting surfaces.

### Example 5: Tea sample analysis using particles in microtiter plates

First, second, third, fourth, and fifth interacting surfaces were created using non-coated (1), Triton X-100 coated (2) and epomin 1,800 coated (3) carboxy, Sephadex (4) and silica (5) microparticles (5 µL of 5% solids). These were incubated with Twinings Earl Grey tea and Lipton Earl Grey tea samples in a total volume of 345 µL containing 300 µL of sample (1:10 dilution to MilliQ water), 10 µL of 11 nM Eu chelate ((2,2',2"'',2'' '-[(4'-phenyl-2,2',6'2"-terpyridine-6,6"-diyl)bis(methylenenitrilo)]tetrakis (acetic acid))) and 30 µL of 5 mM phosphate buffer pH 3. The suspension was incubated for 5 min, transferred to a clear maxisorp NUNC microtiter plate and measured for long-lived luminescence signal at 614 nm using a Victor2 time-resolved fluorescence plate reader. The excitation wavelength was 340 nm, the delay time of the measurement was 400 µs and the integration time was 400 µs. Fig. 24 illustrates the counted luminescent photons, with the graph through diamonds representing Twinings Earl Grey tea, and the graph through squares representing Lipton Earl Grey tea. The numbers 1 to 5 on the horizontal axis represent the respective interacting surfaces.

### Example 6 Tea sample analysis using particle column without intermediate stoppers

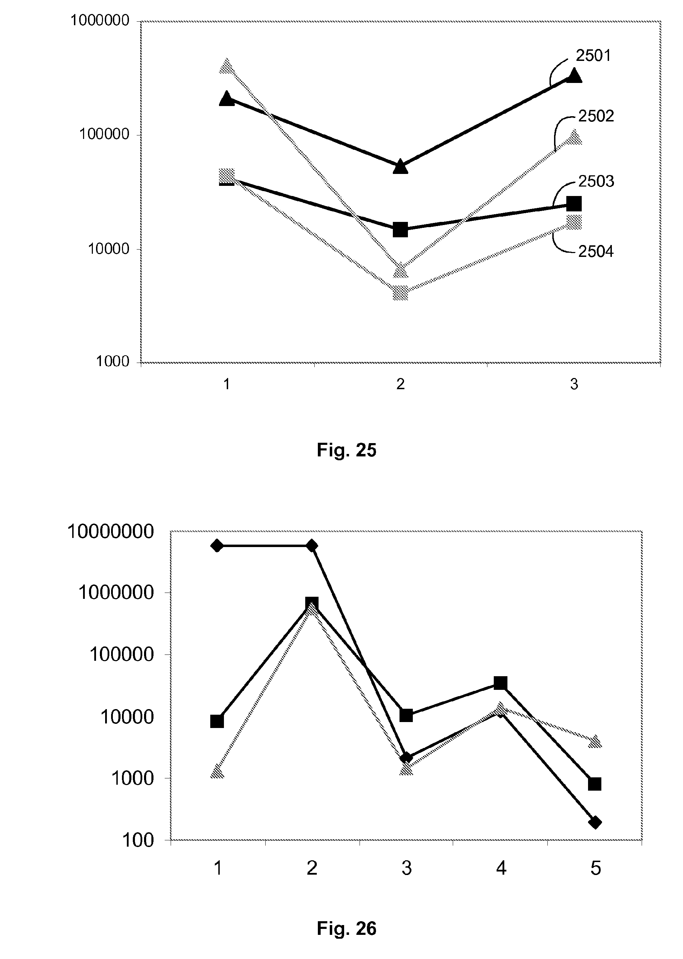

Samples of 1500 µL containing 150 µL of Twinings Earl Grey tea and Lipton Earl Grey tea and 0.5 µL of 1 mM Eu chelate ((2,2',2",2"'-[(4'-phenyl-2,2',6'2"-terpyridine-6,6"-diyl)bis(methylenenitrilo)]tetrakis (acetic acid))) in MilliQ water was injected to the column in two 750 µL volumes using a Biohit pipette (Helsinki, Finland). Approximately 1400 µL of the solution was injected to the particles and the injection was stopped before all solution reached the particles (approximately 100 µL of the solution remained in the column not reaching the particles). Columns contained particles with interacting surfaces in the following order, MB-1 (1), AG (2) and Con (3). Each particle lane was measured for long-lived luminescence signal at 614 nm using a Victor2 time-resolved fluorescence plate reader. The excitation wavelength was 340 nm, the delay time of the measurement was 400 µs and the integration time was 400 µs. Graph 2501 in fig. 25 illustrates the counted luminescent photons for the Twinings Earl Grey tea sample facing the interacting surfaces in the order 3:2:1, and graph 2502 illustrates the counted luminescent photons for the Twinings Earl Grey tea sample facing the interacting surfaces in the order 1:2:3. Similarly graph 2503 illustrates the counted luminescent photons for the Lipton Earl Grey tea sample facing the interacting surfaces in the order 3:2:1, and graph 2504 illustrates the counted luminescent photons for the Lipton Earl Grey tea sample facing the interacting surfaces in the order 1:2:3. The numbers 1 to 3 on the horizontal axis represent the respective interacting surfaces.

### Example 7: Tea sample analysis using particle column with intermediate stoppers

Samples of 1500 µL were prepared containing 150 µL of MilliQ water, Twinings Earl Grey tea and Lipton Earl Grey tea, each with 0.5 µL of 1 mM Eu chelate ((2,2',2",2"'-[(4'-phenyl-2,2',6'2"-terpyridine-6,6"-diyl)bis(methylenenitrilo)]tetrakis (acetic acid))) in MilliQ water. These were injected to the column in two 750 µL volumes using a Biohit pipette. Approximately 1400 µL of the solution was injected to the particles and the injection was stopped before all solution reached the particles (approximately 100 µL of the solution remained in the column not reaching the particles). Columns contained, in the following order, MB-1 (2), AG (3) and Con (4). Each particle lane and separately the sample solutions before (1) and after (5) the column on a NUNC (Roskilde, Denmark) microtiter well were measured for long-lived luminescence signal at 614 nm using a Victor2 time-resolved fluorescence plate reader. The excitation wavelength was 340 nm, the delay time of the measurement was 400 µs and the integration time was 400 µs. Fig. 26 illustrates the results. The graph through diamonds corresponds to the MilliQ water sample, the graph through squares corrseponds to the Twinings Earl Grey tea sample, and the graph through triangles corresponds to the Lipton Earl Grey tea sample. The sample solution faced the interacting surfaces from left to right.

### Example 8: Tea sample analysis using mix particle column

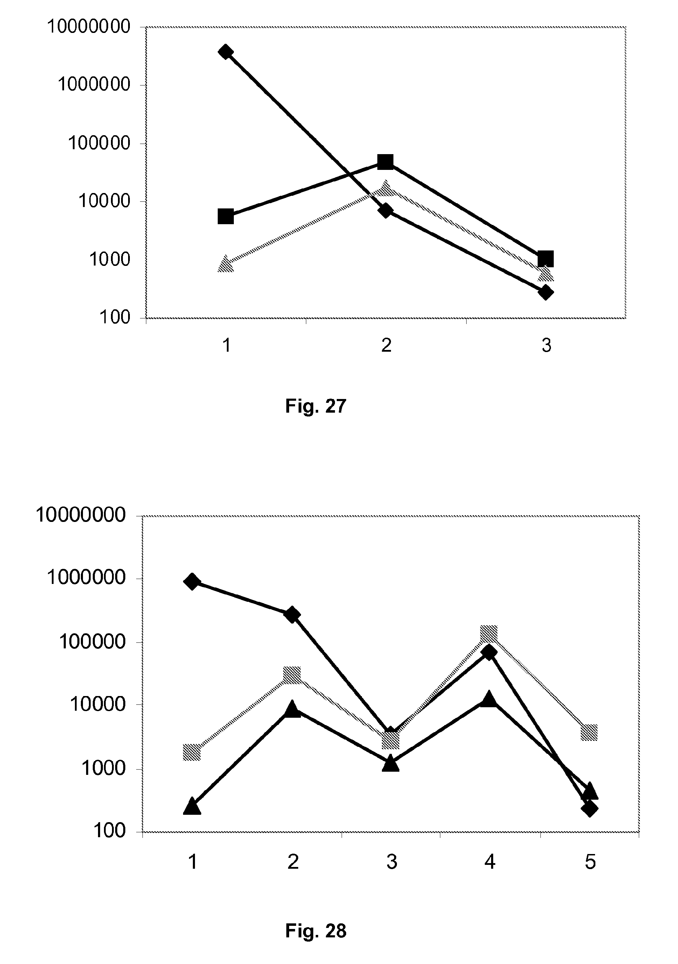

Samples of 250 µL were prepared containing 25 µL of MilliQ water, Twinings Earl Grey tea and Lipton Earl Grey tea, each with 0.5 µL of 0.1 mM Eu chelate ((2,2',2",2"'-[(4'-phenyl-2,2',6'2"-terpyridine-6,6"-diyl)bis(methylenenitrilo)]tetrakis (acetic acid))) in MilliQ water. These were applied through the particle columns using a Biohit pipette. The columns contained a mixture of MB-1, AG and Con particles, and the respective photon counts are illustrated corresponding to the number 2 on the horizontal axis in fig. 27. The mixed lane of particles and separately the sample solutions before (1) and after (3) the column on a NUNC microtiter well were measured for long-lived luminescence signal at 614 nm using a Victor2 time-resolved fluorescence plate reader. The excitation wavelength was 340 nm, the delay time of the measurement was 400 µs and the integration time was 400 µs. The graph through diamonds represents the MilliQ water sample, the graph through squares represents the Twinings Earl Grey tea sample, and the graph through triangles represents the Lipton Earl Grey tea sample.

### Example 9: Tea sample analysis using single particle cartridge column

Samples of 500 µL were prepared containing 50 µL of MilliQ water, Twinings Earl Grey tea and Lipton Earl Grey tea, each with 0.5 µL of 0.1 mM Eu chelate ((2,2',2",2"'-[(4'-phenyl-2,2',6'2"-terpyridine-6,6"-diyl)bis(methylenenitrilo)]tetrakis (acetic acid))) in MilliQ water. These were injected through each cartridge using a Biohit pipette in the following order, MB-1 (2), AG (3) and Con (4). Each particle lane and separately the sample solutions before (1) and after (2) the column on a NUNC microtiter well were measured for long-lived luminescence signal at 614 nm using a Victor2 time-resolved fluorescence plate reader. The excitation wavelength was 340 nm, the delay time of the measurement was 400 µs and the integration time was 400 µs. The photon counts are shown in fig. 28, with the numbers on the horizontal axis corresponding to the measurements as illustrated with the ordinal numbers in parentheses above. The graph through diamonds represents the MilliQ water sample, the graph through squares represents the Twinings Earl Grey tea sample, and the graph through triangles represents the Lipton Earl Grey tea sample.

### Example 10: Tea sample analysis using membrane

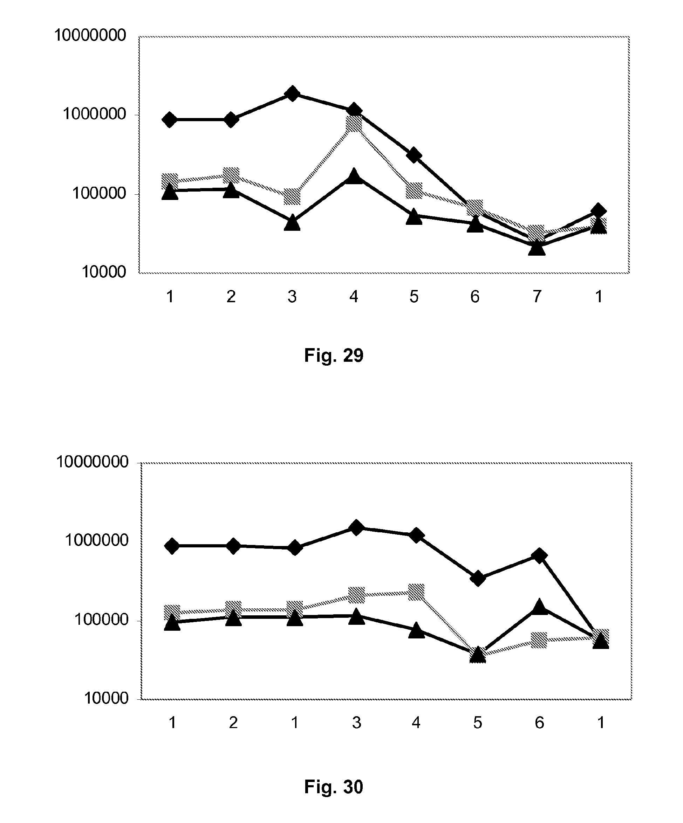

The sample solutions faced the coating lanes of the membranes in the following order:
1. membrane: nitrocellulose (1), BSA (2), epomin 1,800 (3), polyacetic acid (4), polyallyl amine hydrochloride (5), d-sucrose (6) and Triton X-100 (7). The photon counts are illustrated in fig. 29.
2. membrane: nitrocellulose (1) BSA (2), polyallyl amine hydrochloride (3), d-sucrose (4), Triton X-100 (5) and epomin 1,800 (6). The photon counts are illustrated in fig. 30.

The membrane was placed to a 50 mL tube (Falcon, BD, two oak park, Bedford MA) containing 4000 µL of sample solution including 200 µL of MilliQ water, Twinings Earl Grey tea, or Lipton Earl Grey tea, each with 0.5 µL of 0.1 mM Eu chelate ((2,2',2",2"'-[(4'-phenyl-2,2',6'2"-terpyridine-6,6"-diyl)bis(methylenenitrilo)]tetrakis (acetic acid))) in MilliQ water. In figs. 29 and 30, the graph through diamonds represents the MilliQ water sample, the graph through squares represents the Twinings Earl Grey tea sample, and the graph through triangles represents the Lipton Earl Grey tea sample. The samples face the surfaces from left to right. One end of the membrane (approximately 10 mm) was inserted to the solution and the entire membrane was allowed to wet through capillary forces. Each coating and nitrocellulose lanes were measured for long-lived luminescence signal at 614 nm using a Victor2 time-resolved fluorescence plate reader. The excitation wavelength was 340 nm, the delay time of the measurement was 400 µs and the integration time was 400 µs.

### CHARACTERIZATION OF EMBODIMENTS OF THE INVENTION THROUGH NUMBERED CLAUSES

1. A device for holding a sample for optical fingerprinting analysis comprises:
   - a carrier,
   - a distribution of non-specific interacting surfaces extending across said carrier,
   - at least one fluidic channel configured to allow a fluid sample to flow through at least a part of said carrier to get in touch with one or more of said non-specific interacting surfaces, and
   - one or more optical windows adjacent to said non-specific interacting surfaces for enabling optical analysis of results of said sample getting in touch with said non-specific interacting surfaces at multiple locations of the carrier.
2. In one exemplary device according to numbered clause 1, said non-specific interacting surfaces are non-specific binding surfaces.
3. In one exemplary device according to any of numbered clauses 1 or 2:
   - the device comprises a membrane that extends across or constitutes said carrier, and
   - one or more surfaces of said membrane offer said non-specific interacting surfaces to said sample.
4. In one exemplary device according to any of numbered clauses 1 or 2:
   - the device comprises a plurality of particles immobilized within said carrier, and
   - surfaces of said particles offer said non-specific interacting surfaces to said sample.
5. In one exemplary device according to numbered clause 4, individual particles are either immobilized within a matrix defined by a structural material of said carrier, or chemically bonded on a surface offered by a structural material of said carrier.
6. In one exemplary device according to numbered clause 5:
   - said structural material of said carrier is porous,
   - said individual particles are immobilized within pores of said structural material, and
   - a capillary propagation route through pores of said structural material defines said at least one fluidic channel.
7. In one exemplary device according to any previous numbered clause:
   - a structural material of the carrier has the form of an essentially planar layer, and
   - said non-specific interacting surfaces have an essentially two-dimensional distribution within a plane defined by said structural material.
8. In one exemplary device according to numbered clause 7:
   - said carrier comprises a porous layer adjacent to an impermeable layer,
   - said non-specific interacting surfaces are part of or carried by said impermeable layer, and
   - a capillary propagation route through pores of said porous layer define said at least one fluidic channel.
9. In one exemplary device according to numbered clause 8:
   - the device comprises a plurality of particles immobilized on a surface of said impermeable layer, and
   - surfaces of said particles offer said non-specific interacting surfaces to said sample.
10. In one exemplary device according to any of numbered clauses 7 to 9:
   - the device comprises non-specific interacting surfaces of several different types, and
   - non-specific interacting surfaces of same type form continuous areas that extend across a region of said structural material.
11. In one exemplary device according to numbered clause 10, said region has the form of at least one of the following: a spot, a sector, a stripe perpendicular to a sample flow direction, a stripe parallel to a sample flow direction.
12. In one exemplary device according to numbered clause 7, a layer of the device that is transparent to at least one wavelength of optical radiation and parallel to said essentially planar layer defines said one or more optical windows.
13. In one exemplary device according to any of numbered clauses 1 to 6:
   - the carrier defines a compartment, and
   - said non-specific interacting surfaces are enclosed within said compartment.
14. In one exemplary device according to numbered clause 13, the carrier has a tubular form that defines a sample flow direction essentially parallel with a longitudinal axis of said tubular form.
15. In one exemplary device according to any of numbered clauses 13 or 14:
   - the device comprises particles of several different types, wherein the type of particle is defined by the type of non-specific interacting surfaces it offers to a sample,
   - the carrier defines a single compartment, and
   - particles of different types are confined together in said single compartment.
16. In one exemplary device according to numbered clause 15, particles of different types are separated from each other within said single compartment by further immobilizing particles of particular type within an immobilizer, such as hydrogel.
17. In one exemplary device according to any of numbered clauses 13 or 14:
   - the device comprises particles of several different types, wherein the type of particle is defined by the type of non-specific interacting surfaces it offers to a sample,
   - the carrier defines a number of separate compartments, and
   - particles of a particular type are confined in a compartment separate from particles of other types.
18. In one exemplary device according to numbered clause 17:
   - the carrier comprises a combination of compartment cells attached together through mechanical attachment means, and
   - the mechanical attachment means define parts of the fluidic channel for allowing a fluid sample to flow from one compartment cell to another.
19. In one exemplary device according to any of numbered clauses 13 to 18:
   - a compartment of said carrier is free of non-specific interacting surfaces for allowing an optical measurement of a fluid sample alone.
20. In one exemplary device according to any of numbered clauses 13 to 19, a wall of said compartment defines said one or more optical windows.
21. A method for performing optical fingerprinting analysis of a fluid sample comprises:
   - making the sample flow over or through a distribution of non-specific interacting surfaces that extend across a carrier, so that the sample gets in touch with one or more of said non-specific interacting surfaces,
   - directing an excitation signal to multiple locations of said carrier where the sample has got in touch with one or more of said non-specific interacting surfaces,
   - collecting and detecting luminescent responses from locations of said carrier subjected to said excitation signal, and
   - producing a combined set of measurement data indicative of said luminescent responses to characterise said sample.
22. In one exemplary method according to numbered clause 21, the step of directing optical excitation radiation to multiple locations of said carrier comprises selectively irradiating a number of locations with optical excitation radiation one location at a time.
23. In one exemplary method according to any of numbered clauses 21 or 22, the step of producing a combined set of measurement data comprises:
   - deriving one or more statistical descriptors that characterise a plurality of individual measurement results of luminescent response, and
   - outputting said one or more statistical descriptors as said combined set of measurement data.
24. In one exemplary method according to numbered clause 21, the step of directing optical excitation radiation to multiple locations of said carrier comprises irradiating a number of locations simultaneously with selected irradiation intensities.
25. In one exemplary method according to numbered clause 24:
   - said irradiation intensities have been selected to reflect the relative significance of luminescent responses obtained from corresponding locations of a measured reference sample, and
   - a list of luminescent response measurement results from said irradiating of a number of locations simultaneously is output as said combined measurement data.

## Claims

1. A device for holding a sample for optical fingerprinting analysis, comprising:
- a carrier,
- a distribution of non-specific interacting surfaces extending across said carrier,
- at least one fluidic channel configured to allow a fluid sample to flow through at least a part of said carrier to get in touch with one or more of said non-specific interacting surfaces, and
- one or more optical windows adjacent to said non-specific interacting surfaces for enabling optical analysis of results of said sample getting in touch with said non-specific interacting surfaces at multiple locations of the carrier.

2. A device according to claim 1, wherein:
- the device comprises a membrane that extends across or constitutes said carrier, and
- one or more surfaces of said membrane offer said non-specific interacting surfaces to said sample.

3. A device according to claim 1, wherein:
- the device comprises a plurality of particles immobilized within said carrier, and
- surfaces of said particles offer said non-specific interacting surfaces to said sample.

4. A device according to any previous claim, wherein:
- a structural material of the carrier has the form of an essentially planar layer,
- said non-specific interacting surfaces have an essentially two-dimensional distribution within a plane defined by said structural material,
- the device comprises non-specific interacting surfaces of several different types, and
- non-specific interacting surfaces of same type form continuous areas that extend across a region of said structural material.

5. A device according to claim 4, wherein a layer of the device that is transparent to at least one wavelength of optical radiation and parallel to said essentially planar layer defines said one or more optical windows.

6. A device according to any of claims 1 to 3, wherein:
- the carrier defines a compartment, and
- said non-specific interacting surfaces are enclosed within said compartment.

7. A device according to claim 6, wherein:
- the device comprises particles of several different types, wherein the type of particle is defined by the type of non-specific interacting surfaces it offers to a sample,
- the carrier defines a single compartment, and
- particles of different types are confined together in said single compartment.

8. A device according to claim 7, wherein particles of different types are separated from each other within said single compartment by further immobilizing particles of particular type within an immobilizer, such as hydrogel.

9. A device according to claim 6, wherein:
- the device comprises particles of several different types, wherein the type of particle is defined by the type of non-specific interacting surfaces it offers to a sample,
- the carrier defines a number of separate compartments, and
- particles of a particular type are confined in a compartment separate from particles of other types.

10. A device according to claim 9, wherein:
- the carrier comprises a combination of compartment cells attached together through mechanical attachment means, and
- the mechanical attachment means define parts of the fluidic channel for allowing a fluid sample to flow from one compartment cell to another.

11. A device according to any of claims 6 to 10, wherein:
- a compartment of said carrier is free of non-specific interacting surfaces for allowing an optical measurement of a fluid sample alone.

12. A method for performing optical fingerprinting analysis of a fluid sample, comprising:
- making the sample flow over or through a distribution of non-specific interacting surfaces that extend across a carrier, so that the sample gets in touch with one or more of said non-specific interacting surfaces,
- directing an excitation signal to multiple locations of said carrier where the sample has got in touch with one or more of said non-specific interacting surfaces,
- collecting and detecting luminescent responses from locations of said carrier subjected to said excitation signal, and
- producing a combined set of measurement data indicative of said luminescent responses to characterise said sample.

13. A method according to claim 12, wherein the step of directing optical excitation radiation to multiple locations of said carrier comprises selectively irradiating a number of locations with optical excitation radiation one location at a time.

14. A method according to any of claims 12 or 13, wherein the step of producing a combined set of measurement data comprises:
- deriving one or more statistical descriptors that characterise a plurality of individual measurement results of luminescent response, and
- outputting said one or more statistical descriptors as said combined set of measurement data.

15. A method according to claim 12, wherein the step of directing optical excitation radiation to multiple locations of said carrier comprises irradiating a number of locations simultaneously with selected irradiation intensities.
